# EUROPEAN PATENT APPLICATION

(11) **EP 1 968 204 A2**
(43) Date of publication of application: **10.09.2008**
(21) Application number: 08003971.2
(22) Date of filing: 04.03.2008
(51) Int. Cl.: H04B 1/74, H04Q 7/30

(54) **Base station radio apparatus, mobile unit communication system, and base station radio apparatus control method**

(30) Priority: 08.03.2007 JP 2007059061
(71) Applicant: NEC Corporation, Minato-ku Tokyo (JP)
(72) Inventor: Kono, Masaki, Kodama-gun Saitama (JP)
(74) Representative: Töpken, Enno

(57) **Abstract**

This invention provides a base station radio apparatus, a mobile unit communication system, and a control method for a base station radio apparatus that suppress a deterioration in communication quality. Success rates can be monitored by monitoring outgoing/incoming calls and call connections, and control can be executed to detect a potential card for which a success rate declines and force the card to enter an ALM state. Thus, a deterioration in communication quality can be suppressed.

## Description

This application is based upon and claims the benefit of priority from Japanese patent application No. 2007-059061, filed on March 8, 2007, the disclosure of which is incorporated herein in its entirety by reference.

### BACKGROUND OF THE INVENTION

The present invention relates to a base station radio apparatus, a mobile unit communication system, and a method of controlling a base station radio apparatus.

### Description of Related Art

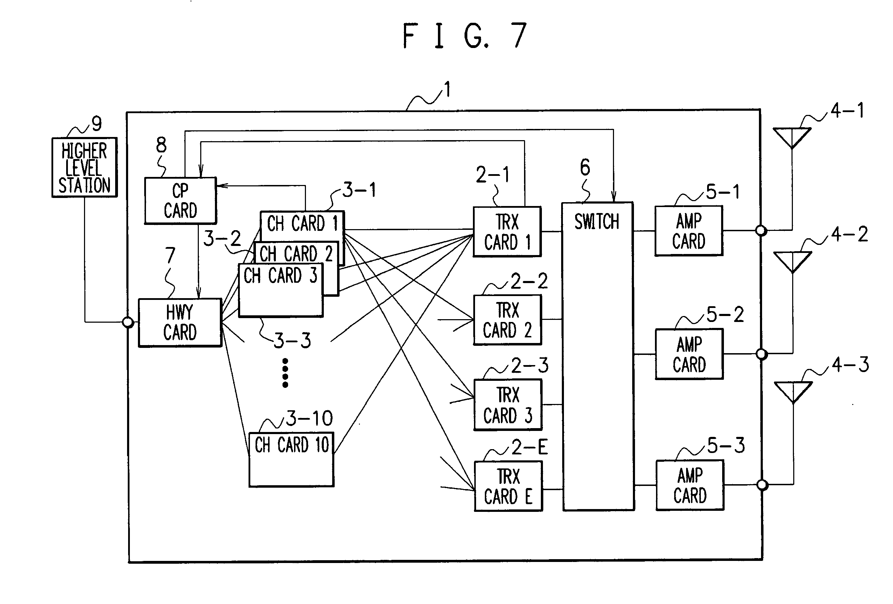

Fig. 7 is a block diagram of a base station radio apparatus used in a conventional mobile unit communication system.

A base station radio apparatus 1 shown in Fig. 7 is an apparatus for an example in which there are three sectors. The base station radio apparatus 1 is equipped with wireless cards that are referred to as "TRX cards" for each sector (TRX card 1 (2-1) to TRX card 3 (2-3)) and a standby card (TRX card E (2-E)) for use in case of a failure. The base station radio apparatus 1 is also equipped with CH cards 3-1 to 3-10 that carry out call processing of signals that undergo frequency conversion at the TRX cards (2-1 to 2-3).

Since the CH cards 3-1 to 3-10 are connected to all of the TRX cards 2-1 to 2-E to achieve a soft handoff (situation in which a switchover is made after temporarily entering a simultaneous connection state between the handoff source that is the base station currently performing communication and the handoff destination that is the base station with which new communication is desired) between sectors, it is assumed that there are no limits called sectors for the CH cards 3-1 to 3-10. When a certain sector among the TRX cards 2-1 to 2-3 experiences a failure, the ALM (alarm) state of the relevant card among the TRX cards 2-1 to 2-3 is detected and a switchover is made to the standby TRX card E (2-E) to enable continuation of operations.

When any of the CH cards 3-1 to 3-10 fails, the ALM state is detected and thereafter usage is stopped until recovery is performed by resetting or card replacement. Although failure of one of the CH cards 3-1 to 3-10 results in a reduction in the number of call processing operations of the base station radio apparatus 1, a problem does not arise with respect to continuation of operations (for example, see Japanese Patent Laid Open Publication No. 63-090258 and Japanese Patent Laid Open Publication No. 10-285278).

### SUMMARY OF THE INVENTION

Conventionally detection of a failure is performed in this manner within the card itself, and only when a fault can be detected, a warning that is referred to as ALM (alarm, warning sound, or warning lamp flashing) is made and a standby system is switched to or usage is prohibited.

However, in some cases a fault cannot be detected by the card itself. In the case of the TRX cards 2-1 to 2-3 this means it is not possible to conduct operations with the sector in question, while in the case of the CH cards 3-1 to 3-10 operations are not possible when using the relevant card among the CH cards 3-1 to 3-10 and thus the success rate of call connections is decreased. In this state, because a warning such as an ALM is not emitted even when monitoring is being performed with the operation system of a higher level station 9 of the base station radio apparatus 1 of the mobile communication system that operates a large number of apparatuses, it is difficult to detect the fault and time is required until the problem is discovered as a potential ALM and thus the communication quality under the control of the base station radio apparatus 1 with the failure deteriorates.

An exemplary object of the present invention is therefore to provide a base station radio apparatus, a mobile unit communication system, and a method of controlling a base station radio apparatus that suppress a deterioration in communication quality.

To solve the above described problem, an invention according to claim 1 comprises a unit that monitors outgoing/incoming calls and call connections in a base station radio apparatus used in a mobile unit communication system.

According to the invention set forth in claim 1, success rates can be monitored by monitoring outgoing/incoming calls and call connections, and control can be performed so that a potential card for which a success rate is declining can be detected and forced to enter an ALM state. Thus, a deterioration in communication quality can be suppressed.

An invention according to claim 2 is in accordance with the invention set forth in claim 1, further comprising a unit that executes control to force a card for which a success rate of outgoing/incoming calls or call connections declines to enter an ALM state.

According to the invention set forth in claim 2, by controlling a card for which a success rate of outgoing/incoming calls or call connections declines so as to force the card to enter an ALM state it is possible to monitor success rates and detect a potential card for which a success rate is declining and execute control to force the card to enter an ALM state. Thus, a deterioration in communication quality can be suppressed.

An invention according to claim 3 is in accordance with the invention set forth in claim 1 or 2, further comprising a unit that notifies a higher level station when control is performed to force a card to enter an ALM state.

According to the invention set forth in claim 3, by notifying a higher level station when control is performed to force a card to enter an ALM state, the current situation can be immediately ascertained and the dealt with in suitable handling. Thus, a deterioration in communication quality can be suppressed.

An invention according to claim 4 is a base station radio apparatus used in a mobile unit communication system, comprising a unit that, in a case of a potential ALM that does not emit an ALM warning even though a card or a module fails, monitors success rates of outgoing/incoming calls and call processing and performs control to force a corresponding card or module to enter an ALM state to stop use thereof so as not to cause a deterioration in communication quality.

According to the invention set forth in claim 4, in the case of a potential ALM that does not emit an ALM warning even though a card or a module fails, a deterioration in communication quality can be suppressed by monitoring success rates of outgoing/incoming calls and call processing and executing control to force a corresponding card or module to enter an ALM state to stop use thereof.

An invention according to claim 5 is a mobile unit communication system comprising a mobile station radio apparatus and a base station radio apparatus that conducts communication with the mobile station radio apparatus, wherein the base station radio apparatus comprises a unit that monitors outgoing/incoming calls and call connections.

According to the invention set forth in claim 5, it is possible to monitor success rates by monitoring outgoing/incoming calls and call connections to thereby detect a potential card for which a success rate is declining and perform control to force a corresponding card to enter an ALM state. Thus, a deterioration in communication quality can be suppressed.

An invention according to claim 6 is in accordance with the invention set forth in claim 5, wherein the base station radio apparatus further comprises a unit that performs control so that a card for which a success rate of outgoing/incoming calls or call connections declines is forced to enter an ALM state.

According to the invention set forth in claim 6, by performing control so that a card for which a success rate of outgoing/incoming calls or call connections declines is forced to enter an ALM state, it is possible to monitor success rates, detect a potential card for which a success rate is declining, and perform control to force the card to enter an ALM state. Thus a deterioration in communication quality can be suppressed.

An invention according to claim 7 is in accordance with the invention set forth in claim 5 or 6, further comprising a unit that notifies a higher level station when control is performed to force a card to enter an ALM state.

According to the invention set forth in claim 7, by notifying a higher level station when control is performed to force a card to enter an ALM state, the current situation can be immediately ascertained and dealt with in suitable handling. Thus a deterioration in communication quality can be suppressed.

An invention according to claim 8 is a mobile unit communication system comprising a mobile station radio apparatus and a base station radio apparatus that conducts communication with the mobile station radio apparatus, wherein the base station radio apparatus comprises a unit that, in a case of a potential ALM that does not emit an ALM warning even though a card or a module fails, monitors success rates of outgoing/incoming calls and call processing, and performs control to force a corresponding card or module to enter an ALM state and stop use thereof so as not to cause a deterioration in communication quality.

According to the invention set forth in claim 8, in the case of a potential ALM that does not emit an ALM warning even though a card or a module fails, a deterioration in communication quality can be suppressed by monitoring success rates of outgoing/incoming calls and call processing and performing control to force a corresponding card or module to enter an ALM state to stop use thereof.

An invention according to claim 9 is a control method of a base station radio apparatus used in a mobile unit communication system, wherein outgoing/incoming calls and call connections are monitored.

According to the invention set forth in claim 9, it is possible to monitor success rates by monitoring outgoing/incoming calls and call connections to thereby detect a potential card for which a success rate is declining and perform control to force a corresponding card to enter an ALM state. Thus, a deterioration in communication quality can be suppressed.

An invention according to claim 10 is in accordance with the invention set forth in claim 9, wherein control is performed so that a card for which a success rate of outgoing/incoming calls or call connections declines is forced to enter an ALM state.

According to the invention set forth in claim 10, by performing control so that a card for which a success rate of outgoing/incoming calls or call connections declines is forced to enter an ALM state, it is possible to monitor success rates, detect a potential card for which a success rate is declining, and perform control to force the card to enter an ALM state. Thus, a deterioration in communication quality can be suppressed.

An invention according to claim 11 is in accordance with the invention set forth in claim 9 or 10, wherein a higher level station is notified when control is performed to force a card to enter an ALM state.

According to the invention set forth in claim 11, by notifying a higher level station when control is performed to force a card into an ALM state, the current situation can be immediately ascertained and dealt with in suitable handling. Thus, a deterioration in communication quality can be suppressed.

An invention according to claim 12 is a control method of a base station radio apparatus that is used in a mobile unit communication system that, in a case of a potential ALM that does not emit an ALM warning even though a card or a module fails, does not allow a deterioration in communication quality to occur by monitoring success rates of outgoing/incoming calls and call processing and executing control that forces a corresponding card or module to enter an ALM state to stop use thereof.

According to the invention set forth in claim 12, in the case of a potential ALM that does not emit an ALM warning even though a card or a module fails, a deterioration in communication quality can be suppressed by monitoring success rates of outgoing/incoming calls and call processing and performing control to force the corresponding card or module to enter an ALM state to stop use thereof.

A feature of the present invention is that, even in a case in which a card with a failure cannot detect the failure itself, control is performed to force the card that is assumed to be faulty (potential ALM) based on the success rate of call processing or outgoing/incoming calls in actual operations to enter an ALM state and disable use thereof so that operations are not affected.

According to the present invention, success rates can be monitored by monitoring outgoing/incoming calls and call connections, and control can be performed to detect a potential card for which a success rate is declining and force the card to enter an ALM state. Thus, a deterioration in communication quality can be suppressed.

### BRIEF DESCRIPTION OF THE DRAWINGS

The exemplary objects and features of the present invention will become more apparent from the consideration of the following detailed description taken in conjunction with the accompanying drawings, in which:
Fig. 1 is a block diagram of an exemplary embodiment of a base station radio apparatus to which a method of controlling a base station radio apparatus according to the present invention is applied;
Fig. 2 is a view showing one example of a block diagram of a CP card 8 that is used in a base station radio apparatus according to the present invention;
Fig. 3 is a transition diagram of call processing of a base station radio apparatus shown in Fig. 1;
Fig. 4 is a view that illustrates the relation between time and the number of acceptances and success rates at a time of an outgoing call in the base station radio apparatus shown in Fig. 1;
Fig. 5 is a view that illustrates the relation between time and the number of acceptances and success rates at a time of an incoming call in the base station radio apparatus shown in Fig. 1;
Fig. 6 is a view that illustrates the relation between time and the number of acceptances and success rates at a time of a call connection in the base station radio apparatus shown in Fig. 1; and
Fig. 7 is a block diagram of a base station radio apparatus that is used in a conventional mobile unit communication system.

### DESCRIPTION OF THE EXEMPLARY EMBODIMENTS

A feature of the present invention is that, in a base station radio apparatus of a mobile unit communication system, in a case in which a warning such as an ALM is not emitted (potential ALM) even when a card or a module or the like fails, a deterioration in the communication quality is suppressed by monitoring success rates of outgoing/incoming calls or call processing and performing control to force a corresponding card or module into an ALM state or the like to stop use thereof.

### [Description of Configuration]

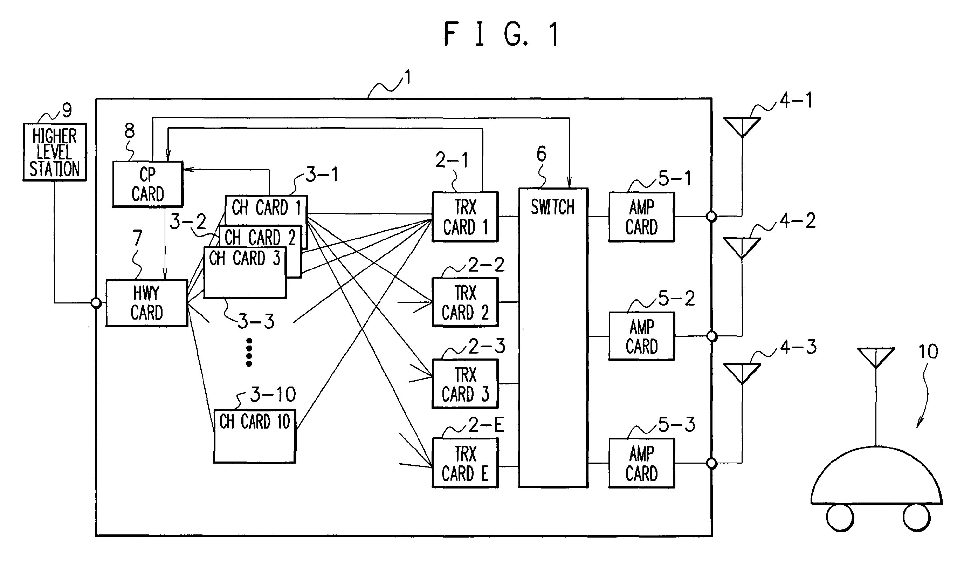

Fig. 1 is a block diagram of an exemplary embodiment of a base station radio apparatus that applies a method of controlling a base station radio apparatus according to the present invention.

A base station radio apparatus 1 includes antennas 4-1 to 4-3 as interfaces for wireless communication with a mobile station radio apparatus 10, AMP cards 5-1 to 5-3 that amplify input/output signals from the antennas 4-1 to 4-3, a switch 6 that switches from one card among TRX cards 2-1 to 2-3 to a standby TRX card E (2-E) to maintain operations when a fault occurs in accordance with a control signal from a CP card 8, TRX cards 2-1 to 2-E that perform frequency conversion of input/output signals from the AMP cards 5-1 to 5-3 via the switch 6, CH cards 3-1 to 3-10 that process (call processing) baseband signals from the TRX cards 2-1 to 2-E, a HWY card 7 that sends to and receives from the higher level station 9 call processing data that is from/for the CH cards 3-1 to 3-10, and a CP card 8 that monitors and controls the states of all the cards.

Note that although a case is described according to the present exemplary embodiment in which the number of CH cards is 10, the number of TRX cards is 4, the number of AMP cards is 3, and the number of antennas is 3, the present invention is not limited to this configuration.

In a mobile unit communication system that uses this base station radio apparatus, in the case of a potential ALM that does not emit an ALM warning even though a card or a module fails, control is performed to monitor the success rates of outgoing/incoming calls and call processing so that a deterioration in communication quality is not allowed to occur by forcing the corresponding card or module to enter an ALM state and stop usage thereof.

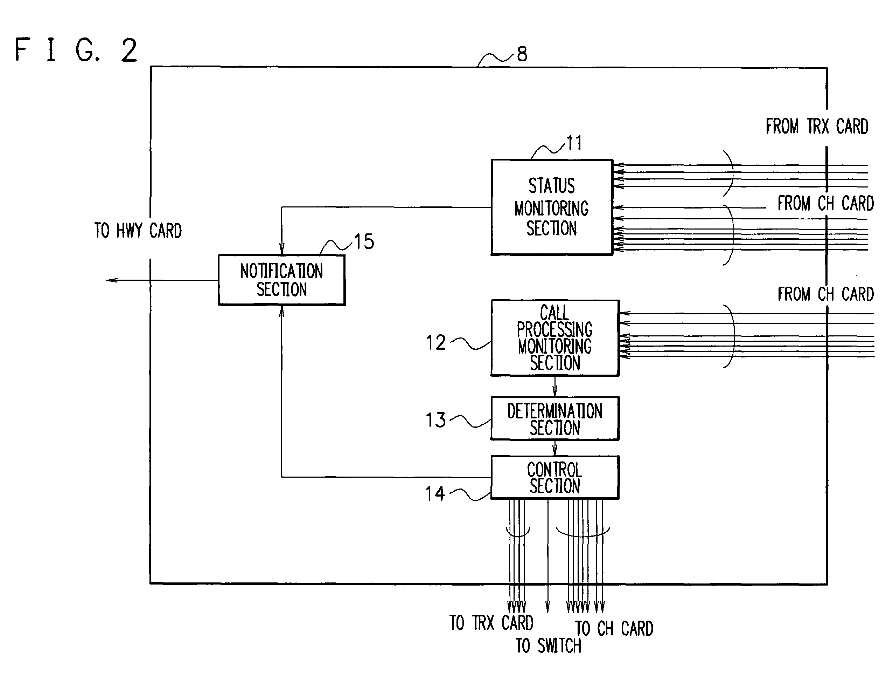

Fig. 2 is a view showing one example of a block diagram of a CP card 8 that is used in the base station radio apparatus according to the present invention.

The CP card 8 comprises a status monitoring section 11 as a unit that gathers information with which each card monitors the state of their own card, a call processing monitoring section 12 that compiles success rates of outgoing/incoming calls or call processing for each of the TRX cards 2-1 to 2-E and CH cards 3-1 to 3-10, a determination section 13 that checks whether or not the success rates of outgoing/incoming calls or call processing that are compiled by the call processing monitoring section 12 are equal to or greater than a preset threshold value, a control section 14 as a unit that forces a card that is determined by the determination section 13 to have a success rate below the threshold value into an ALM state; and a notification section 15 as a unit that notifies the state of each card to the higher level station 9 via the HWY card 7.

The higher level station 9 has a large number of base station radio apparatuses 1 under its command, and includes a function for mediating and monitoring communication between the base station radio apparatuses.

### [Description of Operations]

The operations of the present exemplary embodiment will now be described in detail referring to Figs. 2 to 6.

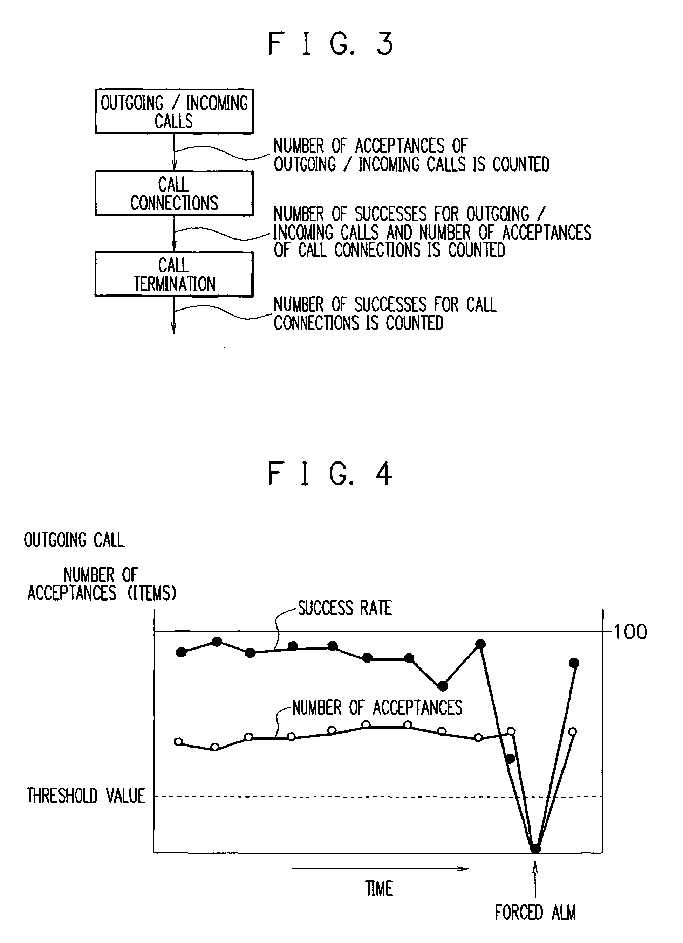

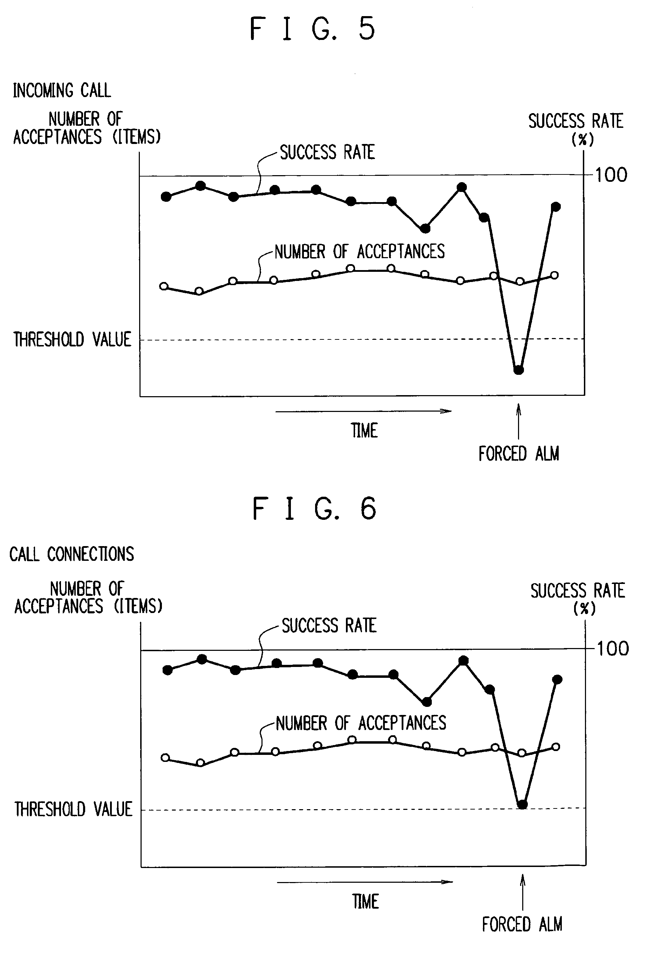

Fig. 3 is a transition diagram of call processing of the base station radio apparatus shown in Fig. 1. Fig. 4 is a view that illustrates the relation between time and the number of acceptances and success rates for outgoing calls in the base station radio apparatus shown in Fig. 1. In Fig. 4, the left vertical axis represents the number of acceptances, the right vertical axis represents success rates, and the horizontal axis represents time. Fig. 5 is a view that illustrates the relation between time and the number of acceptances and success rates for incoming calls in the base station radio apparatus shown in Fig. 1. In Fig. 5, the left vertical axis represents the number of acceptances of incoming calls, the right vertical axis represents success rates, and the horizontal axis represents time. Fig. 6 is a view that illustrates the relation between time and the number of acceptances and success rates for call connections in the base station radio apparatus shown in Fig. 1. In Fig. 6, the left vertical axis represents the number of acceptances, the right vertical axis represents success rates, and the horizontal axis represents time.

The mobile station radio apparatus 10 makes an outgoing call to the base station radio apparatus 1.

The sector number (number of relevant card among TRX cards 2-1 to 2-E) and the relevant card number among the CH cards 3-1 to 3-10 that are used are notified from the relevant CH card 3-1 to 3-10 to the call processing monitoring section 12 of the CP card 8.

In the case of a CDMA communication system, since the user signal is not known from the radio signal that passes through the relevant TRX card 2-1 to 2-3, the information is obtained form the relevant CH card 3-1 to 3-10 after back diffusion.

CDMA is an abbreviation of "Code Division Multiple Access", and is one kind of system used for wireless communications including cellular phones.

The call processing monitoring section 12 counts the number of acceptances of outgoing calls with respect to the corresponding cards among the TRX cards 2-1 to 2-3 and CH cards 3-1 to 3-10. When an exchange with the higher level station 9 via the HWY card 7 for this outgoing call processing ends normally in a call connection, the call processing monitoring section 12 counts the number of outgoing call successes and the number of acceptances of call connections. When the call connection ends in normal termination of the call, the call processing monitoring section 12 counts the number of call connection successes.

In the case of incoming calls, the base station radio apparatus 1 transmits a signal to the mobile station radio apparatus 10 (makes an incoming call).

The sector number (number of relevant card among TRX cards 2-1 to 2-3) and the relevant card number among the CH cards 3-1 to 3-10 that are used are notified from the relevant CH card 3-1 to 3-10 to the call processing monitoring section 12 of the CP card 8.

The call processing monitoring section 12 counts the number of acceptances of incoming calls with respect to the corresponding cards among the TRX cards 2-1 to 2-3 and CH cards 3-1 to 3-10. When an exchange of signals with the higher level station 9 via the HWY card 7 for this incoming call processing ends normally in a call connection, the call processing monitoring section 12 counts the number of incoming calls successes and the number of acceptances of call connections. When the call connection ends in normal termination of the call, the call processing monitoring section 12 counts the number of call connection successes. The counts of the determination section 13 are compiled as shown in Tables 1 and 2. Note that to facilitate description, numerical values are not entered in Tables 1 and 2.

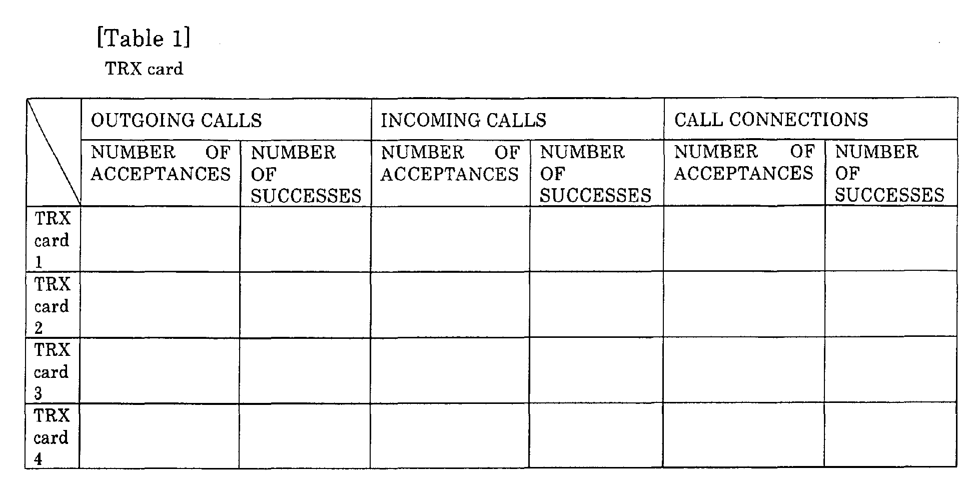

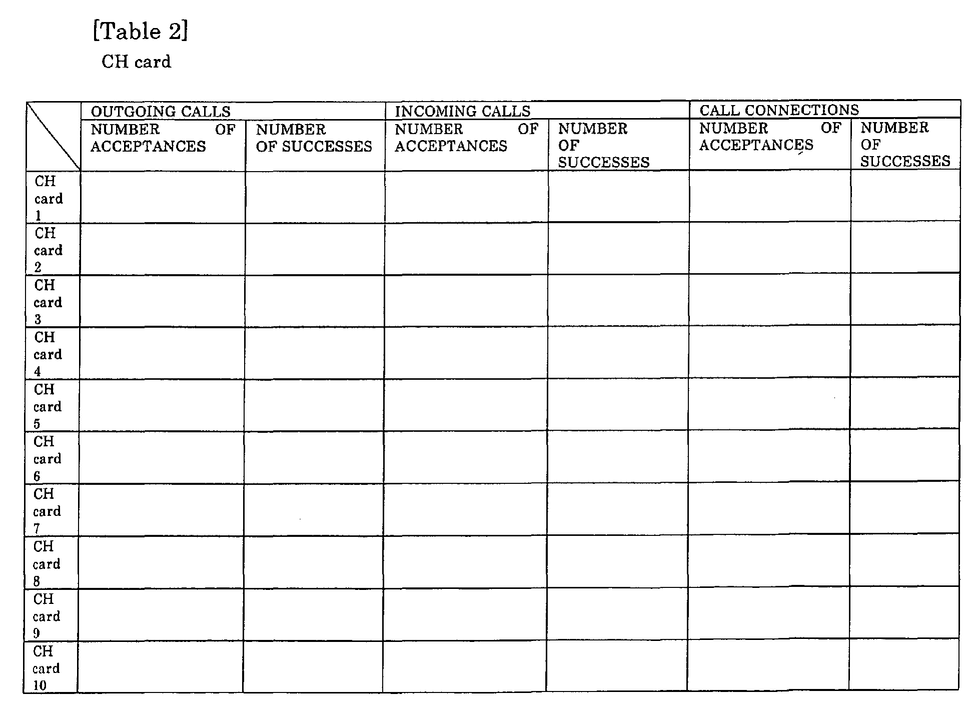

The determination section 13 of the CP card 8 constantly calculates success rates based on the number of acceptances and number of successes of the call processing monitoring section 12, and compares the success rates with preset threshold values.

The success rates of the call processing monitoring section 12 are represented as shown in Table 3 and Table 4. Note that to facilitate description, numerical values are not entered in Tables 3 and 4.

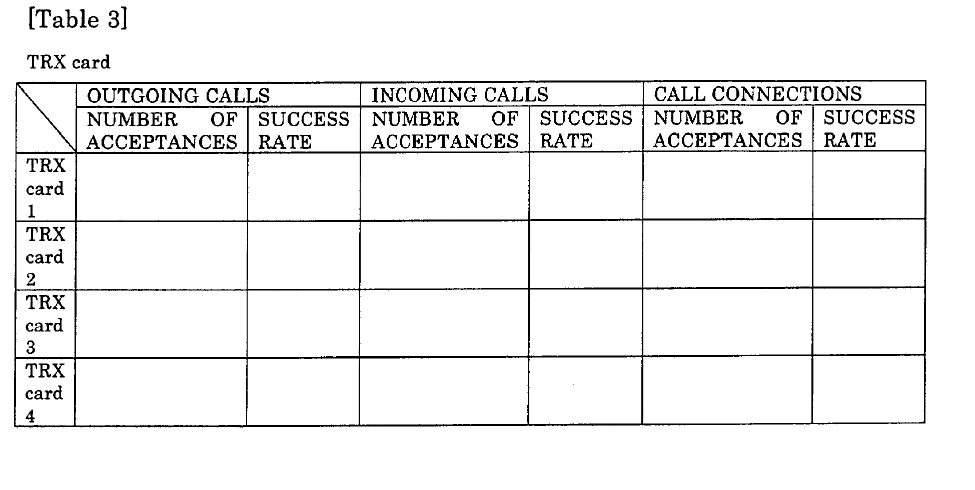

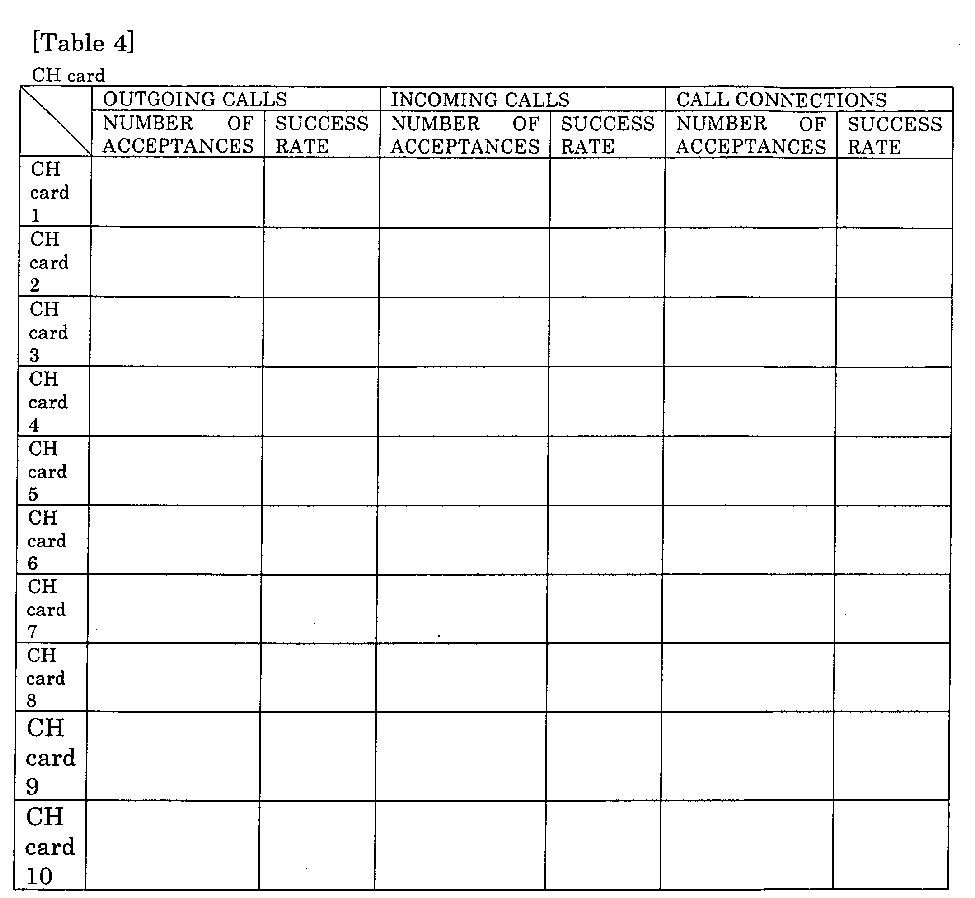

When a success rate is lower than a threshold value, the determination section 13 inputs the number of the corresponding card to the control section 14. The control section 14 executes control to force an ALM based on the input card number, switches to the standby TRX card 2-E, and notifies the card number for which the ALM control was executed to the notification section 15. The notification section 15 can notify the operation system of the higher level station 9 via the HWY card 7.

Hereunder, using Figs. 4 to 6, a specific case is described in which a fault that cannot be detected occurs in a given one of the TRX cards 2-1 to 2-3 during operations.

Fig. 4 illustrates one example of a case in which acceptance of an outgoing call could not be performed. Consequently, the number of acceptances becomes zero and the success rate also becomes zero. (The success rate can not be calculated when the number of acceptances is zero, and in that case the success rate is taken to be 0 %.) Setting of the threshold value for the number of acceptances differs for each base station apparatus.

Fig. 5 illustrates one example of a case in which the success rate of incoming calls drops. It is found that although the number of acceptances is maintained, the success rate drops.

Fig. 6 illustrates one example of a case in which the success rate of call connections drops. It is found that although the number of acceptances is maintained, the success rate drops.

Upon detecting the above described state, the determination section 13 of the CP card 8 determines that there is a potential ALM, and the control section 14 performs control to force the corresponding card among the TRX cards 2-1 to 2-3 to enter an ALM state and switch to the standby TRX card 2-E. As a result, the success rate and number of acceptances of outgoing/incoming calls and the success rate and number of acceptances of call connections return to a normal value. Further, by notifying the higher level station 9, the higher level station 9 can ascertain the current situation and can make a request relating to the necessity for replacing a card.

According to the present invention, by monitoring success rates of outgoing/incoming calls and call connections to detect a potential ALM card for which a success rate drops and forcing the corresponding card to enter an ALM state, it is possible to not allow a deterioration in communication quality to occur.

It is to be noted that the above described exemplary embodiment illustrates one preferred exemplary embodiment of the present invention. However, the present invention is not limited thereto and various modifications can be implemented within a range that does not depart from the spirit and scope of the invention. For example, the invention can also be applied to selection of a communication path to be used in a case in which a HWY card that has an interface between higher level stations is monitored and a deterioration state of a higher level communication network is detected.

The present invention can be utilized in a mobile unit communication system that takes as an object a mobile unit such as an automobile, a boat, or an airplane.

## Claims

1. A base station radio apparatus used for a mobile unit communication system, comprising means that monitors outgoing/incoming calls and call connections.

2. The base station radio apparatus according to claim 1, further comprising means that executes control to force a card for which a success rate of outgoing/incoming calls or call connections declines to enter an ALM state.

3. The base station radio apparatus according to claim 1 or 2, further comprising means that notifies a higher level station when control is executed to force a card to enter an ALM state.

4. A base station radio apparatus used for a mobile unit communication system, comprising means that, in a case of a potential ALM that does not emit an ALM warning even though a card or a module fails, monitors success rates of outgoing/incoming calls and call processing and performs control to force a corresponding card or module to enter an ALM state to stop use thereof so as not to cause a deterioration in communication quality.

5. A mobile unit communication system comprising a mobile station radio apparatus and a base station radio apparatus that conducts communication with the mobile station radio apparatus, wherein the base station radio apparatus comprises means that monitors outgoing/incoming calls and call connections.

6. The mobile unit communication system according to claim 5, wherein the base station radio apparatus further comprises means that executes control so that a card for which a success rate of outgoing/incoming calls or call connections declines is forced to enter an ALM state.

7. The mobile unit communication system according to claim 5 or 6, further comprising means that notifies a higher level station when control is executed to force a card to enter an ALM state.

8. A mobile unit communication system comprising a mobile station radio apparatus and a base station radio apparatus that conducts communication with the mobile station radio apparatus, wherein the base station radio apparatus comprises means that, in a case of a potential ALM that does not emit an ALM warning even though a card or a module fails, monitors success rates of outgoing/incoming calls and call processing, and executes control to force a corresponding card or module to enter an ALM state and stop use thereof so as not to cause a deterioration in communication quality.

9. A control method of a base station radio apparatus used in a mobile unit communication system, **characterized by** monitoring outgoing/incoming calls and call connections.

10. The control method of a base station radio apparatus according to claim 9, **characterized by** controlling so that a card for which a success rate of outgoing/incoming calls or call connections declines is forced to enter an ALM state.

11. The control method of a base station radio apparatus according to claim 9 or 10, **characterized by** notifying a higher level station when control is executed to force a card to enter an ALM state.

12. A control method of a base station radio apparatus that is used in a mobile unit communication system that, in a case of a potential ALM that does not emit an ALM warning even though a card or a module fails, does not allow a degradation in communication quality to occur by monitoring success rates of outgoing/incoming calls and call processing and executing control that forces a corresponding card or module to enter an ALM state to stop use thereof.
